# EUROPEAN PATENT APPLICATION

(11) **EP 4 717 944 A1**
(43) Date of publication of application: **01.04.2026**
(21) Application number: 23938566.9
(22) Date of filing: 23.10.2023
(51) Int. Cl.: F16F 1/387

(54) **BUSH**

(30) Priority: 22.05.2023 JP 2023084073
(71) Applicant: Prospira Corporation, Kanagawa prefecture 212-0013 (JP)
(72) Inventor: TOKUHASHI, Fumiaki, Kawasaki city, Kanagawa 212-0013 (JP); YAMAMURA, Kazuo, Kawasaki city, Kanagawa 212-0013 (JP); HIROHATA, Kento, Kawasaki city, Kanagawa 212-0013 (JP)
(74) Representative: V.O.
(86) International application number: PCT/JP2023/038212
(87) International publication number: WO 2024/241604

(57) **Abstract**

The bush according to the present invention includes an inner cylinder; an outer cylinder; and the elastic body disposed between the inner cylinder and the outer cylinder. The elastic body has a broached part penetrating in an axial direction. The inner cylinder has a convex part that protrudes in a broaching direction perpendicular to the axis. The convex part protrudes outward in the broaching direction perpendicular to the axis beyond the innermost point of the broached part in the broaching direction perpendicular to the axis. At least a portion of the convex part is adjacent to the elastic body.

## Description

### Technical Field

The present invention relates to a bush, particularly a trailing arm bush used for vehicles.

### Background Art

In order to reduce vibration, a vehicle uses a bush including an outer cylinder, an inner cylinder, and an elastic body placed between the outer cylinder and the inner cylinder (see Patent Literature 1 for example). Such a bush requires durability of the elastic body. However, it has been difficult to ensure the durability of the elastic body due to not only torsional input to the inner cylinder axis (input in the rotational direction around the axis) but also large input in a perpendicular-to-axis direction.

### Citation List

### Patent Literature

Patent Literature 1: Japanese Unexamined Patent Application Publication No. 2020-204339

### Summary of Invention

### Technical Problem

It may be possible to suppress the displacement for large inputs in a perpendicular-to-axis solid direction (a direction in which the entire perpendicular-to-axis direction is made of an elastic body) by providing a convex part (made of metal, for example) that protrudes from the inner cylinder to the outside in the perpendicular-to-axis solid direction. As vehicle performances become complex increasingly, bushes used for vehicles also require to exhibit the intended spring characteristics in respective directions. The above-described solution changes (increases) a ratio of the spring characteristics in the perpendicular-to-axis solid direction to the spring characteristics in a perpendicular-to-axis broaching direction (perpendicular-to-axis direction of the partially broached bush) (spring characteristics in the perpendicular-to-axis solid direction divided by spring characteristics in the perpendicular-to-axis broaching direction).

The present invention aims to provide a bush that can suppress displacement in a perpendicular-to-axis solid direction while minimizing the effect on the ratio of the spring characteristics in the perpendicular-to-axis solid direction to the spring characteristics in a perpendicular-to-axis broaching direction.

### Solution to Problem

The present invention is summarized as follows.
(1) A bush includes: an inner cylinder; an outer cylinder; and an elastic body placed between the inner cylinder and the outer cylinder. The elastic body includes a broached part penetrating in an axial direction. The inner cylinder includes a convex part protruding in a perpendicular-to-axis broaching direction. The convex part protrudes outward from the innermost of the broached part in the perpendicular-to-axis broaching direction. At least part of the convex part is adjacent to the elastic body.
(2) In the bush according to item (1) above, the convex part is shaped to increase the width from the inside to the outside in the perpendicular-to-axis broaching direction.
(3) In the bush according to item (1) or (2), a plate is placed between the outer cylinder and the broached part in the perpendicular-to-axis broaching direction.

### Advantageous Effects of Invention

The present invention is able to provide a bush that can suppress displacement in a perpendicular-to-axis solid direction while minimizing the effect on the ratio of the spring characteristics in the perpendicular-to-axis solid direction to the spring characteristics in a perpendicular-to-axis broaching direction.

### Brief Description of Drawings

FIG. 1 is an end view of a bush according to an embodiment of the present invention, viewed in the axial direction.
FIG. 2 is a cross-sectional view of FIG. 1.
FIG. 3 is another cross-sectional view of FIG. 1.
FIG. 4 is an end view of the bush according to another embodiment of the present invention, viewed in the axial direction.
FIG. 5 is a cross-sectional view of FIG. 4.
FIG. 6 is a diagram illustrating an application example of the bush.
FIG. 7 is an end view of a bush according to a comparative example, viewed in the axial direction;
FIG. 8 is a diagram illustrating an evaluation result of the second embodiment.

### Description of Embodiments

Hereinafter, one embodiment of the present invention will be described in detail with reference to the drawings.

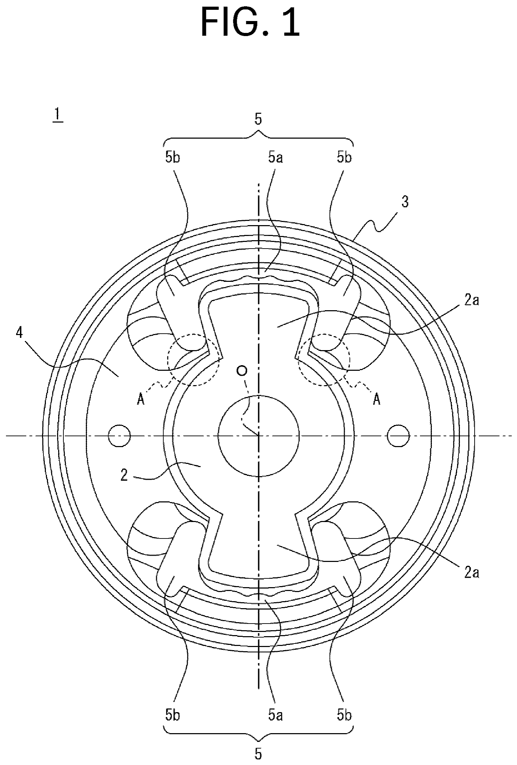

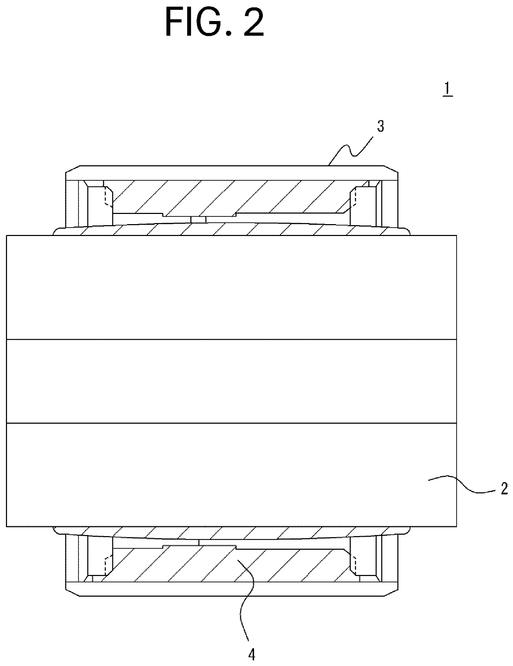

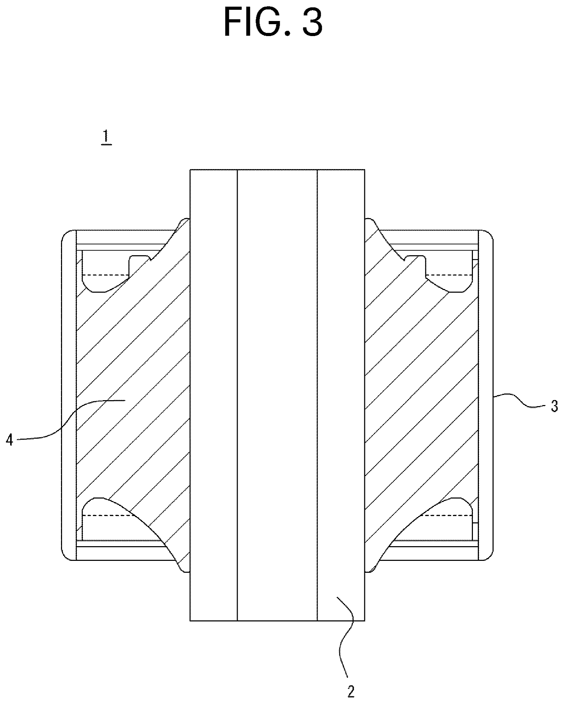

FIG. 1 is an end view of a bush according to an embodiment of the present invention, viewed in the axial direction. FIG. 2 is a cross-sectional view of FIG. 1. FIG. 3 is another cross-sectional view of FIG. 1. In this specification, the "perpendicular-to-axis direction" signifies a direction perpendicular to the axial direction of the bush.

As illustrated in FIGS. 1 to 3, a bush 1 according to the present embodiment includes an inner cylinder 2, an outer cylinder 3, and an elastic body 4 placed between the inner cylinder 2 and the outer cylinder 3.

According to the present embodiment, the inner cylinder 2 and the outer cylinder 3 are concentrically placed around axis O as the center in a cross-sectional view perpendicular to the axial direction. According to the present embodiment, the inner cylinder 2 is made of metal. Specifically, the inner cylinder 2 can be made of carbon steel or aluminum alloy, for example. According to the present embodiment, the outer cylinder 3 is made of metal. Specifically, the outer cylinder 3 can be made of carbon steel or aluminum alloy, for example.

According to the present embodiment, the elastic body 4 is made of rubber. The elastic body 4 can also be made of elastic materials other than rubber. The elastic body 4 elastically connects the inner cylinder 2 and the outer cylinder 3.

According to the present embodiment, the elastic body 4 is formed of a broached part (void) 5 penetrating in the axial direction. In this example, the broached part 5 is provided at two locations in the vertical direction in the drawing, one above the inner cylinder 2 and one below the same.

In the illustrated example, the broached part 5 includes a wavelike slit part 5a extending in an approximately circumferential direction, and a hole part 5b extending from each end of the slit part 5a in an approximately perpendicular-to-axis direction. The slit part 5a extends in a wave-like manner and can suppress abnormal noise caused by the crushed slit part 5a in contact with a convex part 2a.

In the bush 1 according to the present embodiment, the inner cylinder 2 includes the convex part 2a protruding in the perpendicular-to-axis broaching direction. In this example, the inner cylinder 2 includes two convex parts 2a, one protruding upward in the drawing and the other protruding downward in the drawing. In the illustrated example, the convex part 2a is shaped to gradually increase the width from the inside (toward central axis O) toward the outside in the perpendicular-to-axis broaching direction. In the bush 1 according to the present embodiment, the convex part 2a protrudes outward from the innermost of the broached part 5 (the innermost of the hole part 5b in the perpendicular-to-axis broaching direction in this example) in the perpendicular-to-axis broaching direction. At least part of the convex part 2a (part of circled area A in the drawing) is located adjacent to the elastic body 4. In this example, at least part of the convex part 2a (part of circled area A in the drawing) touches the elastic body 4. Meanwhile, at least part of the convex part 2a may not touch the elastic body 4 and may be located adjacent to it to such an extent as to come into contact during use.

The following describes the effects of the bush 1 according to the present embodiment.

In the bush 1 according to the present embodiment, the inner cylinder 2 includes the convex part 2a protruding in the perpendicular-to-axis broaching direction. At least part of the convex part 2a (part of circled area A in the drawing) is located adjacent to the elastic body 4. A large input, if applied in the perpendicular-to-axis solid direction, is alleviated by at least part of the convex part 2a that is displaced to compressively deform the elastic body 4 through the location in contact with the elastic body 4, thus suppressing displacement in the perpendicular-to-axis solid direction. The convex part 2a protrudes outward in the perpendicular-to-axis broaching direction from the innermost of the perpendicular-to-axis broaching direction of the broached part 5, making it possible to effectively exert the above-described effect while sufficiently ensuring the protruding width. This technique requires almost no change to the shape of the elastic body 4, making it possible to suppress an effect on the ratio of the spring characteristics in the perpendicular-to-axis solid direction to the spring characteristics in the perpendicular-to-axis broaching direction. Designs for the shape of the convex part 2a can also adjust the timing of suppressing displacement in the perpendicular-to-axis solid direction.

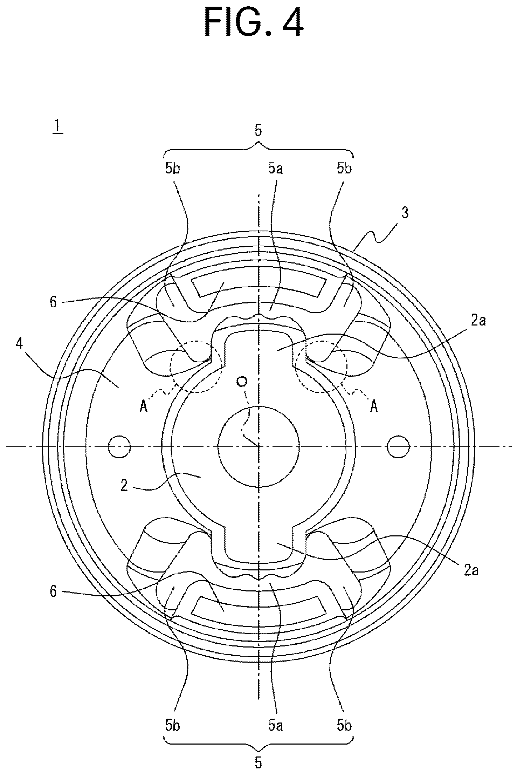

According to the present embodiment, the convex part 2a is shaped to gradually increase the width from the inside to the outside in the perpendicular-to-axis broaching direction. A large input, if applied in the perpendicular-to-axis solid direction, displaces the convex part 2a, making it possible to accelerate the timing of compressively deforming the elastic body 4. As illustrated in FIG. 4, the convex part 2a can be shaped to keep the width almost constant from the inside to the outside in the perpendicular-to-axis broaching direction or can be shaped otherwise variously. It is possible to adjust the timing of suppressing displacement in the perpendicular-to-axis solid direction.

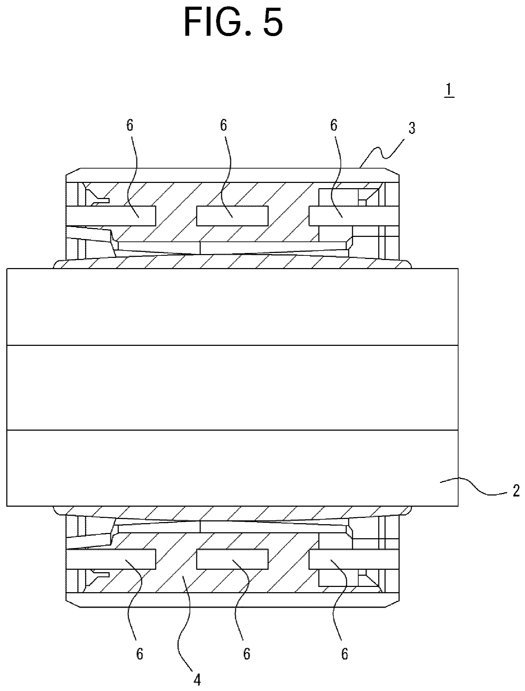

As illustrated in FIGS. 4 and 5, it would be also advantageous to place a plate 6 between the outer cylinder 3 and the broached part 5 in the perpendicular-to-axis broaching direction. This is because it is possible to reduce the shock in response to input in the perpendicular-to-axis broaching direction and prevent the occurrence of abnormal noise between the metals due to the wear of the elastic body. The plate 6 is favorably made of a metal such as steel. This can ensure the degree of freedom in designing the inner cylinder 2 and the elastic body 4. The bush 1 illustrated in FIGS. 1 through 3 according to the embodiment also enables the plate 6 to be placed between the outer cylinder 3 and the broached part 5 in the perpendicular-to-axis broaching direction.

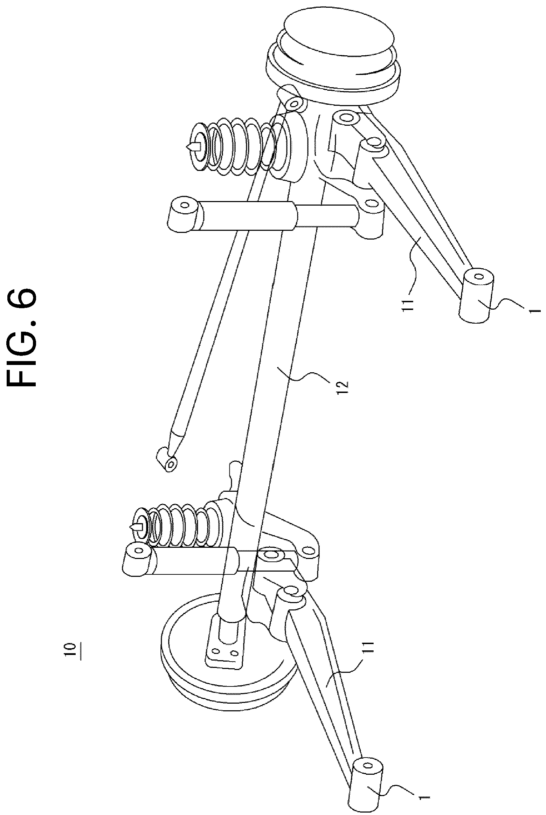

FIG. 6 is a diagram illustrating an application example of the bush. As illustrated in FIG. 6, the bush 1 according to the above-described embodiments can be applied to a suspension device 10. The suspension device 10 includes a pair of right and left trailing arms 11 to which tires are attached; a torsion bar 12 that connects the pair of right and left trailing arms 11; and the bush 1 that connects the trailing arms 11 to a vehicle body.

The above describes the embodiments of the present invention, but the invention is not limited to the above embodiments. The following describes embodiments of the present invention, but the invention is not limited to the following embodiments.

### Embodiment

### (First Embodiment)

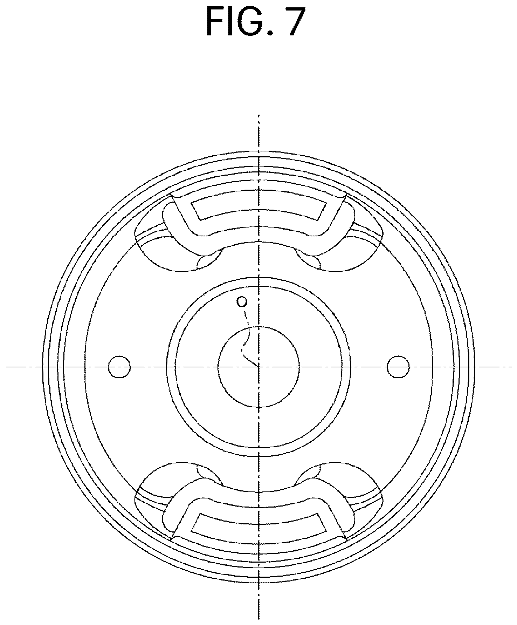

An FEM analysis simulation is performed in order to confirm the effect of the present invention. According to an invention example 1, as illustrated in FIGS. 4 and 5, the inner cylinder includes a convex part, and a plate is placed between the outer cylinder and the broached part. According to an invention example 2, as illustrated in FIGS. 1 through 3, the inner cylinder includes a convex part, and the convex part is shaped to gradually increase the width from the inside to the outside in the perpendicular-to-axis broaching direction. The invention example 2 uses no plate. According to a comparative example, as illustrated in FIG. 7, the inner cylinder includes no convex part, and the plate is placed between the outer cylinder and the broached part.

The FEM analysis is performed to simulate distortion while a load is applied in each direction., As shown in Table 1, the invention examples 1 and 2 suppress distortion in the perpendicular-to-axis solid direction, compared to the comparative example. Table 1 shows the results of the comparative example, using an index of 100. The smaller the value, the smaller the distortion.

**[Table 1]**

| | Comparative example | Invention example 1 | Invention example 2 |
|---|---|---|---|
| End view | FIG. 7 | FIG. 4 | FIG. 1 |
| Distortion after loading in perpendicular-to-axis broaching direction | 100 | 85 | 90 |
| Distortion after loading in perpendicular-to-axis solid direction | 100 (tensile) | 90 (tensile) | 80 (tensile) |
| Distortion after loading in axis direction | 100 (shear) | 105 (shear) | 105 (shear) |
| Distortion after loading in torsion direction | 100 (tensile) | 100 (tensile) | 100 (tensile) |
| Total distortion | 100 | 95 | 90 |

### (Second Embodiment)

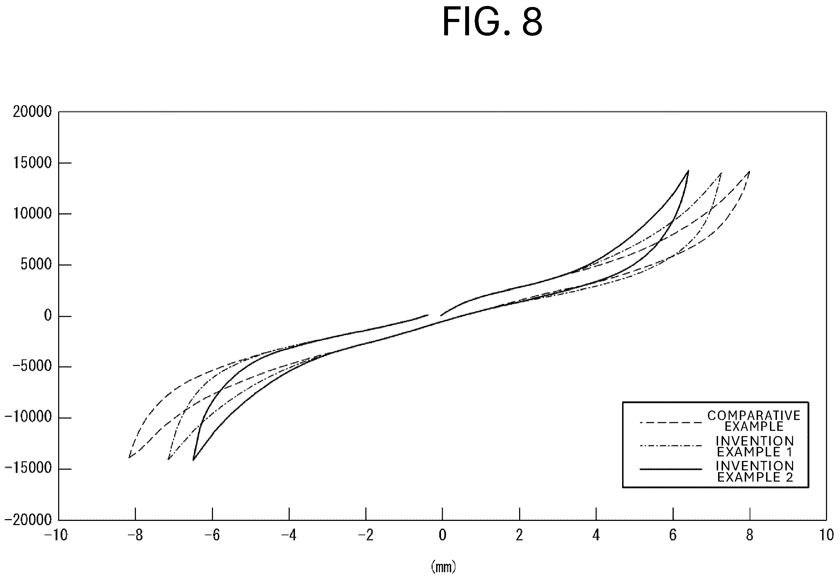

The bushes are prototyped corresponding to the comparative example, the invention examples 1 and 2, according to the first embodiment, and evaluated deflection and durability when a load is applied in the perpendicular-to-axis solid direction. We carried out the evaluation in the following procedure. (i) First, spring characteristics is measured in each direction before the durability test. This is shown under the heading "prior-durability spring" in Table 2. The prior-durability springs of the invention examples 1 and 2 are represented as indexes based on the prior-durability spring as 100 for the comparative example. The larger the value, the greater the prior-durability spring. (ii) Then, applying a specified number of vibrations under a specified load condition after completion of the specified number of vibrations, the spring characteristics is remeasured in each direction. By calculating spring change rates before and after the durability test, this is shown under the heading "posterior-durability spring improvement index" in Table 2 and is represented as an index based on the comparative example as 1. The larger the value, the more the characteristics are improved. The test was interrupted for the comparative example because the elastic body was damaged severely. The test ceased midway for the invention example 1 because the elastic body cracked in the middle of vibrations. The spring characteristics are recorded after the number of vibrations in the middle. The evaluation results are shown in FIG. 8 and Table 2.

**[Table 2]**

| Item | Comparative example | | Invention example 1 | | Invention example 2 | |
|---|---|---|---|---|---|---|
| | Prior-durability spring | Interrupted at 93000 times | Prior-durability spring | After 45000 times due to crack | Prior-durability spring | After completion of durability test |
| | | Posterior-durability spring improvement index | | Posterior-durability spring improvement index | | Posterior-durability spring improvement index |
| Spring in perpendicular-to-axis solid direction | 100 | 1 | 90 | 4 | 90 | 6 |
| Spring in perpendicular-to-axis broaching direction | 100 | 1 | 95 | 9 | 95 | 14 |
| Spring in axis direction | 100 | 1 | 95 | 8 | 90 | 21 |
| Ratio of spring characteristics in perpendicular-to-axis solid direction to spring characteristics in perpendicular-to-axis broaching direction | 100 | | 0.95 | | 0.95 | |

As illustrated in FIG. 8, the invention examples 1 and 2 suppress the displacement in the perpendicular-to-axis solid direction compared to the comparative example. As illustrated in Table 2, the invention examples 1 and 2 suppress an effect on the ratio of the spring characteristics in the perpendicular-to-axis solid direction to the spring characteristics in the perpendicular-to-axis broaching direction and improve the bush durability compared to the comparative example.

### List of Reference Signs

1: bush, 2: inner cylinder, 3: outer cylinder, 4: elastic body, 5: broached part, 6: plate, 10: suspension device, 11: trailing arm, 12: torsion bar

## Claims

1. A bush comprising:
an inner cylinder;
an outer cylinder; and
an elastic body placed between the inner cylinder and the outer cylinder,
wherein the elastic body includes a broached part penetrating in an axial direction;
wherein the inner cylinder includes a convex part protruding in a perpendicular-to-axis broaching direction;
wherein the convex part protrudes outward from the innermost of the broached part in the perpendicular-to-axis broaching direction; and
wherein at least part of the convex part is adjacent to the elastic body.

2. The bush according to Claim 1,
wherein the convex part is shaped to increase the width from the inside to the outside in the perpendicular-to-axis broaching direction.

3. The bush according to Claim 1,
wherein a plate is placed between the outer cylinder and the broached part in the perpendicular-to-axis broaching direction.
